# EUROPEAN PATENT APPLICATION

(11) **EP 4 600 763 A1**
(43) Date of publication of application: **13.08.2025**
(21) Application number: 23874619.2
(22) Date of filing: 14.09.2023
(51) Int. Cl.: G05B 11/36, G05B 19/409

(54) **ADJUSTMENT SUPPORT SYSTEM, AND ADJUSTMENT SUPPORT METHOD**

(30) Priority: 07.10.2022 JP 2022162494
(71) Applicant: Panasonic Intellectual Property Management Co., Ltd., Kadoma-shi, Osaka 571-0057 (JP)
(72) Inventor: TOSHIHIRO Shunsaku, Osaka 571-0057 (JP); FUJIWARA Hiroshi, Osaka 571-0057 (JP)
(74) Representative: SSM Sandmair
(86) International application number: PCT/JP2023/033550
(87) International publication number: WO 2024/075490

(57) **Abstract**

To efficiently adjust a control parameter of a servo control device. Adjustment support system (10) includes an acquisition part (quantity condition acquiring part (15)) and a notification part (display (12)). The acquisition part acquires a quantity condition including at least one of a control parameter number, which is the number of control parameters, and an operation pattern number, which is the number of operation patterns of a target device (production device (20)). When the control parameter has been previously adjusted under the quantity condition same as or similar to the acquired quantity condition, the notification part notifies at least one of the adjustment time, the number of times of change, and the number of times of operation when the control parameter has been previously adjusted under the quantity condition same as or similar to the acquired quantity condition. When the control parameter has not been previously adjusted under the quantity condition same as or similar to the acquired quantity condition, the notification part notifies at least one of a predetermined adjustment time, the number of times of change, and the number of times of operation.

## Description

### TECHNICAL FIELD

The present disclosure relates to an adjustment support system and an adjustment support method for adjusting a control parameter of a servo control device.

### BACKGROUND ART

Conventionally, an adjustment support system and the like that support adjustment of control parameters of a servo control device that controls a servomotor are known. For example, Patent Literature 1 discloses an adjustment time measurement method in which a time from start to end of an adjustment step is measured for each adjustment step of a program of a control terminal that controls device adjustment equipment, and measurement data is recorded for each of manual adjustment and automatic adjustment.

### Citation List

### Patent Literature

PTL 1: Unexamined Japanese Patent Publication No. H11-248864

### SUMMARY OF THE INVENTION

However, the adjustment time measurement method of Patent Literature 1 measures the time required for adjustment, and does not notify how long it is likely to take for adjustment. In the adjustment time measurement method of Patent Literature 1, there is a problem that the control parameter of the servo control device cannot be efficiently adjusted.

The present disclosure has been made to solve such a problem, and an object of the present disclosure is to provide an adjustment support system and an adjustment support method capable of efficiently adjusting a control parameter of a servo control device.

An adjustment support system according to an aspect of the present disclosure includes an acquisition part and a notification part. The acquisition part acquires a quantity condition. The quantity condition includes at least one of a control parameter number and an operation pattern number. The control parameter number is the number of control parameters for a servo control device that controls an operation of a target device including a servomotor to control the operation of the target device. The operation pattern number is the number of operation patterns of the target device. The notification part notifies at least one of an adjustment time required to adjust the control parameters, a number of times of change of the control parameters, and a number of times of operations of the target device based on the quantity condition acquired by the acquisition part. In a case where the control parameters have been previously adjusted under the quantity condition same as or similar to the quantity condition acquired by the acquisition part, the notification part notifies at least one of the adjustment time, the number of times of change, and the number of times of the operations when the control parameters have been previously adjusted under the quantity condition same as or similar to the quantity condition acquired by the acquisition part. Further, when the control parameters have not been previously adjusted under the quantity condition same as or similar to the quantity condition acquired by the acquisition part, the notification part notifies at least one of the adjustment time, the number of times of change, and the number of times of operation determined in advance based on at least one of the control parameter number and the operation pattern number.

An adjustment support method according to another aspect of the present disclosure includes an acquisition step and a notification step. The acquisition step acquires a quantity condition. The quantity condition includes at least one of a control parameter number and an operation pattern number. The control parameter number is the number of control parameters for a servo control device that controls an operation of a target device including a servomotor to control the operation of the target device. The operation pattern number is the number of operation patterns of the target device. The notification step notifies at least one of an adjustment time required to adjust the control parameter, the number of times of change of the control parameter, and the number of times of operation of the target device based on the quantity condition acquired by the acquisition step. In the notification step, when the control parameter has been previously adjusted under the quantity condition same as or similar to the quantity condition acquired in the acquisition step, at least one of the adjustment time, the number of times of change, and the number of times of operation when the control parameter has been previously adjusted under the quantity condition same as or similar to the quantity condition acquired in the acquisition step is notified. Further, in the notification step, when the control parameter has not been previously adjusted under the quantity condition same as or similar to the quantity condition acquired in the acquisition step, at least one of the adjustment time, the number of times of change, and the number of times of operation determined in advance based on at least one of the control parameter number and the operation pattern number.

According to the present disclosure, it is possible to provide an adjustment support system and an adjustment support method capable of efficiently adjusting a control parameter of a servo control device.

### BRIEF DESCRIPTION OF THE DRAWINGS

Fig. 1 is a schematic diagram illustrating an adjustment support system and a related device according to an exemplary embodiment.
Fig. 2 is a block diagram illustrating a functional configuration of an adjustment support system and a related device in Fig. 1.
Fig. 3 is a table illustrating an example of control parameters.
Fig. 4 is a table illustrating an example of operation patterns.
Fig. 5 is a table illustrating an example of a previous adjustment history.
Fig. 6 is a sequence diagram illustrating an example of an operation of the adjustment support system and a related device of Fig. 1.
Fig. 7 is a flowchart illustrating an example of an operation of the adjustment support system of Fig. 1.
Fig. 8 is a diagram illustrating an example of a display displayed on the adjustment support system of Fig. 1.

### DESCRIPTION OF EMBODIMENT

Hereinafter, exemplary embodiments of the present disclosure will be described. Note that, the exemplary embodiments to be described below each illustrate one specific example of the present disclosure. Therefore, numerical values, constituent elements, arrangement positions and connection modes of the constituent elements, steps, order of the steps, and the like shown in the following exemplary embodiments are merely examples, and are not intended to limit the present disclosure. Thus, among the constituent elements in the following exemplary embodiments, constituent elements that are not described in independent claims indicating the highest concept of the present disclosure are described as optional constituent elements.

Each of the drawings is a schematic diagram, and is not necessarily strictly illustrated. In the drawings, substantially the same components are denoted by the same reference numerals, and redundant description will be omitted or simplified.

### (Exemplary embodiment)

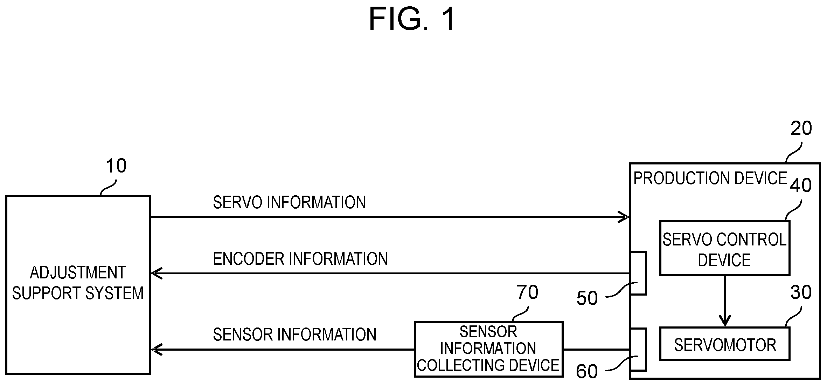

Fig. 1 is a schematic diagram illustrating adjustment support system 10 and a related device according to an exemplary embodiment.

Adjustment support system 10 is a system that supports adjustment of control parameters. The control parameter is a control parameter for servo control device 40 to control the operation of production device 20. For example, the control parameter is a position gain, a torque gain, an integral gain, or the like. For example, adjustment support system 10 is realized by a personal computer or the like.

Adjustment support system 10 transmits servo information to servo control device 40. The servo information includes a control parameter and an operation pattern of production device 20. For example, the servo information includes one or more control parameters and one or more operation patterns. In addition, adjustment support system 10 acquires encoder information generated by encoder 50 included in production device 20 and sensor information generated by sensor 60 included in production device 20. For example, the encoder information includes an encoder value generated by encoder 50. Furthermore, for example, the sensor information includes sensor data generated by sensor 60.

Production device 20 is an example of a target device including servomotor 30. Production device 20 includes servomotor 30, servo control device 40, encoder 50, and sensor 60. In addition, for example, production device 20 includes a mounting device, a processing device, or a machining device.

Servomotor 30 operates production device 20. Specifically, servomotor 30 moves a moving part in production device 20 to operate production device 20.

Servo control device 40 controls the operation of production device 20. Specifically, servo control device 40 controls the operation of production device 20 by controlling servomotor 30. For example, servo control device 40 controls the operation of production device 20 by controlling servomotor 30 on the basis of the servo information transmitted by adjustment support system 10. For example, servo control device 40 is a servo amplifier.

Encoder 50 generates encoder information. As described above, the encoder information includes an encoder value generated by encoder 50. For example, the encoder value is a value indicating the position of servomotor 30.

Sensor 60 generates sensor information. As described above, the sensor information includes sensor data generated by sensor 60. For example, the sensor data is a value indicating the position of the moving part described above.

Sensor information collecting device 70 collects sensor information and transmits the collected sensor information to adjustment support system 10. For example, sensor information collecting device 70 is realized by a personal computer or the like.

Hereinafter, adjustment support system 10 and related devices will be described in detail.

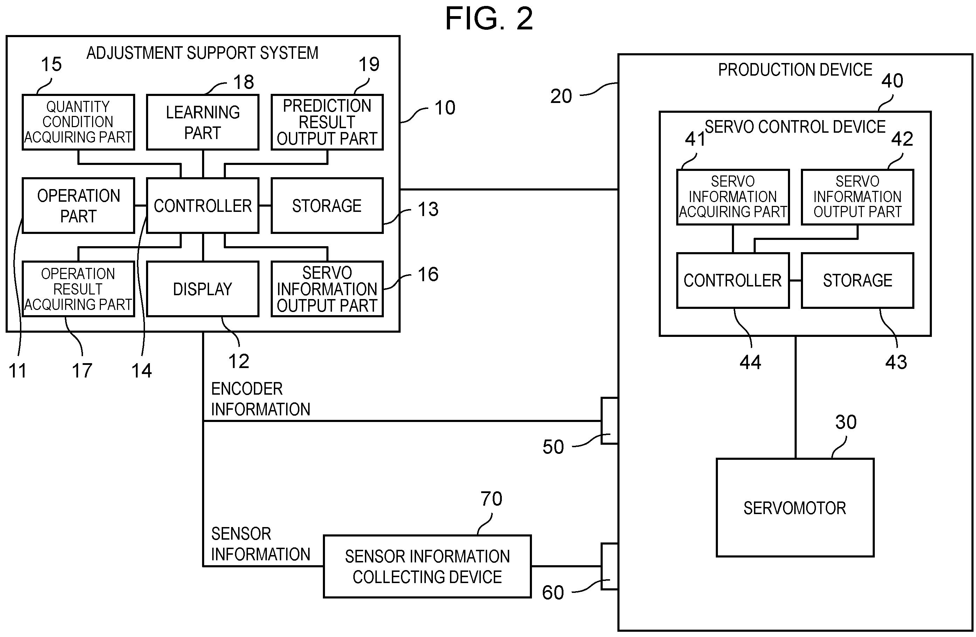

Fig. 2 is a block diagram illustrating functional configurations of adjustment support system 10 and related devices of Fig. 1.

As illustrated in Fig. 2, adjustment support system 10 includes operation part 11, display 12, storage 13, controller 14, quantity condition acquiring part 15, servo information output part 16, operation result acquiring part 17, learning part 18, and prediction result output part 19.

Operation part 11 receives an operation by a user. For example, operation part 11 is realized by a keyboard, a mouse, and the like.

Display 12 displays various types of information. For example, display 12 is realized by a display device or the like.

Storage 13 stores various types of information. For example, storage 13 is realized by, for example, a memory such as a hard disk drive or an SSD memory.

Controller 14 controls adjustment support system 10. Specifically, for example, controller 14 controls notification or the like by display 12. For example, controller 14 is realized by a processor or the like.

Quantity condition acquiring part 15 is an example of an acquisition part that acquires a quantity condition including at least one of a control parameter number, which is the number of control parameters for servo control device 40 that controls the operation of production device 20 including servomotor 30 to control the operation of production device 20, and an operation pattern number, which is the number of operation patterns of production device 20. For example, quantity condition acquiring part 15 is realized by a processor or the like.

As described above, for example, the control parameter is a position gain, a torque gain, an integral gain, or the like. In addition, for example, the operation pattern is an operation pattern of the moving part determined by the moving distance, the maximum speed, the acceleration time, and the deceleration time of the moving part described above.

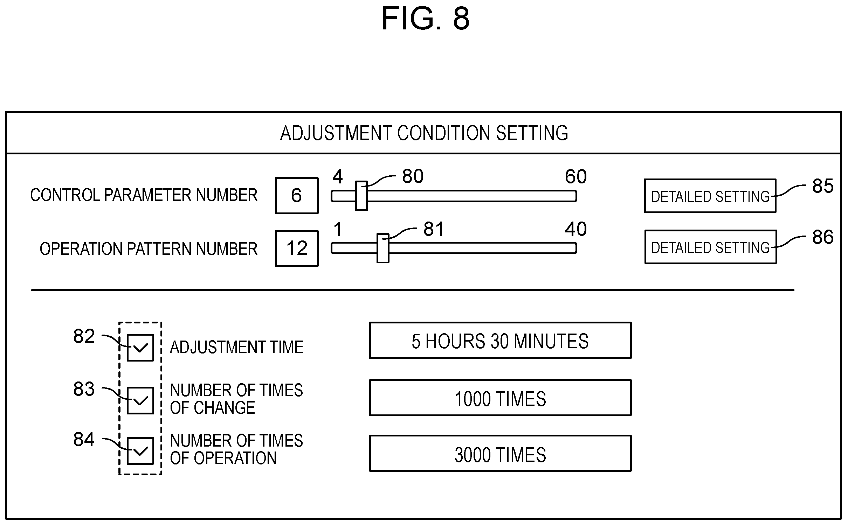

For example, display 12 displays a selection screen for the user to select at least one of the control parameter number and the operation pattern number, and quantity condition acquiring part 15 acquires the quantity condition including at least one of the control parameter number and the operation pattern number selected on the selection screen displayed by display 12. For example, display 12 displays a selection screen on which the control parameter number can be selected by moving bar 80 (described later with reference to Fig. 8) and the operation pattern number can be selected by moving bar 81 (described later with reference to Fig. 8).

In addition, for example, the upper limit value and the lower limit value of each of the control parameter number and the operation pattern number included in the quantity condition acquired by the quantity condition acquiring part 15 are set. For example, the upper limit value of the control parameter number is set to 60, the lower limit value of the control parameter number is set to 4, and display 12 displays a selection screen so that the control parameter number can be selected within a range of 4 or more and 60 or less. In addition, for example, the upper limit value of the operation pattern number is set to 40, the lower limit value of the operation pattern number is set to 1, and display 12 displays a selection screen so that the operation pattern number can be selected within a range of 1 or more and 40 or less.

Display 12 is an example of a notification part, and notifies at least one of the adjustment time required to adjust the control parameter, the number of times of change of the control parameter, and the number of times of operation of production device 20 on the basis of the quantity condition acquired by the quantity condition acquiring part 15. For example, display 12 notifies at least one of the adjustment time required for adjustment of the control parameter, the number of times of change of the control parameter, and the number of times of operation of production device 20 by displaying at least one of the adjustment time required for adjustment of the control parameter, the number of times of change of the control parameter, and the number of times of operation of production device 20 on the display screen. For example, display 12 may display the adjustment time required for adjustment of the control parameter in a graph.

In a case where the control parameter has been previously adjusted under the quantity condition same as or similar to the quantity condition acquired by quantity condition acquiring part 15, display 12 notifies at least one of the adjustment time, the number of times of change of the control parameter, and the number of times of operation of production device 20 when the control parameter has been previously adjusted under the quantity condition same as or similar to the quantity condition acquired by the quantity condition acquiring part 15. For example, at least one of the adjustment time when the control parameter has been previously adjusted under the quantity condition same as or similar to the quantity condition acquired by the quantity condition acquiring part 15, the number of times of change of the control parameter, and the number of times of operation of production device 20 is stored in storage 13.

For example, the adjustment time when the control parameter has been previously adjusted under the quantity condition same as or similar to the quantity condition acquired by the quantity condition acquiring part 15 is a time when production device 20 is operated when the control parameter has been previously adjusted under the quantity condition same as or similar to the quantity condition acquired by the quantity condition acquiring part 15. In addition, for example, the number of times of change of the control parameter when the control parameter has been previously adjusted under the quantity condition same as or similar to the quantity condition acquired by quantity condition acquiring part 15 is the number of times of change of the control parameter when the control parameter has been previously adjusted under the quantity condition same as or similar to the quantity condition acquired by quantity condition acquiring part 15. Further, for example, the number of times of operation of production device 20 when the control parameter has been previously adjusted under the quantity condition same as or similar to the quantity condition acquired by the quantity condition acquiring part 15 is the number of times production device 20 is operated when the control parameter has been previously adjusted under the quantity condition same as or similar to the quantity condition acquired by the quantity condition acquiring part 15.

For example, when the control parameter number is A (A is an integer of 1 or more) and the operation pattern number is B (B is an integer of 1 or more), the control parameter is changed A times and production device 20 is operated A×B times to adjust the control parameter.

For example, the quantity condition same as the quantity condition acquired by the quantity condition acquiring part 15 is a quantity condition including the control parameter number same as the control parameter number included in the quantity condition acquired by the quantity condition acquiring part 15 and including the operation pattern number same as the operation pattern number included in the quantity condition acquired by the quantity condition acquiring part 15.

Furthermore, for example, the quantity condition similar to the quantity condition acquired by the quantity condition acquiring part 15 is the following quantity condition. That is, the quantity condition includes the control parameter number same as the control parameter number included in the quantity condition acquired by the quantity condition acquiring part 15 and includes the operation pattern number different from the operation pattern number included in the quantity condition acquired by the quantity condition acquiring part 15. Alternatively, the quantity condition includes the control parameter number different from the control parameter number included in the quantity condition acquired by the quantity condition acquiring part 15 and includes the operation pattern number same as the operation pattern number included in the quantity condition acquired by the quantity condition acquiring part 15.

In addition, in a case where the control parameter has not been previously adjusted under a quantity condition same as or similar to the quantity condition acquired by quantity condition acquiring part 15, display 12 notifies at least one of an adjustment time determined in advance on the basis of at least one of the control parameter number and the operation pattern number, the number of times of change of the control parameter, and the number of times of operation of production device 20. For example, at least one of an adjustment time determined in advance based on at least one of the control parameter number and the operation pattern number, the number of times of change of the control parameter, and the number of times of operation of production device 20 is stored in storage 13. For example, when the control parameter number is A and the operation pattern number is B, the adjustment time is set to the operation time of production device 20 when production device 20 is operated A×B times, the number of times of change of the control parameter is set to A times, and the number of times of operation of production device 20 is set to A×B times.

For example, servo control device 40 controls the operation of production device 20 on the basis of the quantity condition acquired by quantity condition acquiring part 15, and display 12 updates at least one of the adjustment time to be notified, the number of times of change of the control parameter to be notified, and the number of times of change of the operation pattern to be notified each time the operation of production device 20 by servo control device 40 ends a predetermined number of times. For example, when the control parameter number is A and the operation pattern number is B, servo control device 40 changes the control parameter A times and operates production device 20 A×B times. For example, each time the operation of production device 20 by servo control device 40 ends a predetermined number of times, display 12 updates the adjustment time to be notified by subtracting the time required to operate production device 20 a predetermined number of times from the currently displayed adjustment time. Furthermore, for example, each time the operation of production device 20 by servo control device 40 ends a predetermined number of times, display 12 updates the number of times of change of the control parameter to be notified by subtracting the number of times of change of the control parameter changed while production device 20 is operated the predetermined number of times from the number of times of change of the control parameter currently displayed. Furthermore, for example, each time the operation of production device 20 by servo control device 40 ends a predetermined number of times, display 12 updates the number of times of operation of production device 20 to be notified by subtracting the predetermined number of times from the number of times of operation of production device 20 currently displayed. For example, the predetermined number of times is set by the user.

For example, display 12 updates the adjustment time to be notified on the basis of the time required to operate production device 20 a predetermined number of times. For example, each time the operation of production device 20 by servo control device 40 ends a predetermined number of times, display 12 updates the adjustment time to be notified by subtracting the time required to operate production device 20 a predetermined number of times from the currently displayed adjustment time.

In the present exemplary embodiment, display 12 is an example of a selection part, and receives selection of the priority order to be notified by display 12 for the adjustment time, the number of times of change, and the number of times of operation. For example, display 12 displays a screen for receiving the selection of the priority order to be notified by display 12 for the adjustment time, the number of times of change, and the number of times of operation, thereby receiving the selection of the priority order to be notified by display 12 for the adjustment time, the number of times of change, and the number of times of operation. For example, in a case where there is no space for displaying all of the adjustment time, the number of times of change, and the number of times of operation, display 12 preferentially displays one having a higher priority order among the adjustment time, the number of times of change, and the number of times of operation.

Furthermore, in the present exemplary embodiment, display 12 is an example of a selection part, and receives selection as to whether or not to notify by display 12 for each of the adjustment time, the number of times of change, and the number of times of operation. For example, display 12 displays a screen for receiving selection as to whether or not to notify by display 12 for each of the adjustment time, the number of times of change, and the number of times of operation, thereby receiving selection as to whether or not to notify by display 12 for the adjustment time, the number of times of change, and the number of times of operation. For example, display 12 displays one selected from among the adjustment time, the number of times of change, and the number of times of operation when notified by display 12.

Servo information output part 16 outputs servo information. For example, the servo information includes one or more control parameters of the number included in the quantity condition acquired by quantity condition acquiring part 15 and one or more operation patterns of the number included in the quantity condition acquired by quantity condition acquiring part 15. For example, a specific value of each of the one or more control parameters is set by the user, and a specific value of each of the one or more operation patterns is set by the user. For example, servo information output part 16 is realized by a communication module or the like.

Operation result acquiring part 17 acquires the encoder information and the sensor information, and acquires the operation result of production device 20 based on at least one of the encoder information and the sensor information. For example, the operation result of production device 20 includes the settling time or the like of the moving part of production device 20. For example, operation result acquiring part 17 is realized by a communication module or the like.

Learning part 18 learns the relationship between the control parameter and the operation result of production device 20. Specifically, for example, learning part 18 learns a tendency of a change in the operation result of production device 20 accompanying a change in the value of the control parameter. For example, learning part 18 may learn the relationship among the control parameter, the operation pattern of production device 20, and the operation result of production device 20. Specifically, for example, learning part 18 may learn a tendency of a change in the operation result of production device 20 accompanying a change in the value of the control parameter and the operation pattern of production device 20. For example, learning part 18 learns using a neural network.

Prediction result output part 19 predicts the control parameter on the basis of the learning result by learning part 18 and outputs a prediction result. For example, prediction result output part 19 is a learning model that outputs the value of the control parameter when the value of the control parameter and the operation result of production device 20 are input. For example, prediction result output part 19 predicts and outputs the value of the control parameter such that the operation result of production device 20 becomes a desired result using an evolution strategy.

As illustrated in Fig. 2, servo control device 40 includes servo information acquiring part 41, servo information output part 42, storage 43, and controller 44.

Servo information acquiring part 41 acquires servo information output by adjustment support system 10. For example, servo information acquiring part 41 is realized by a communication module or the like.

Servo information output part 42 outputs the servo information acquired by the servo information acquiring part 41. For example, servo information output part 42 is realized by a communication module or the like.

Storage 43 stores various kinds of information. For example, storage 43 is realized by, for example, a memory such as a hard disk drive or an SSD memory.

Controller 44 controls entire server control device 40. For example, controller 44 is realized by a processor or the like.

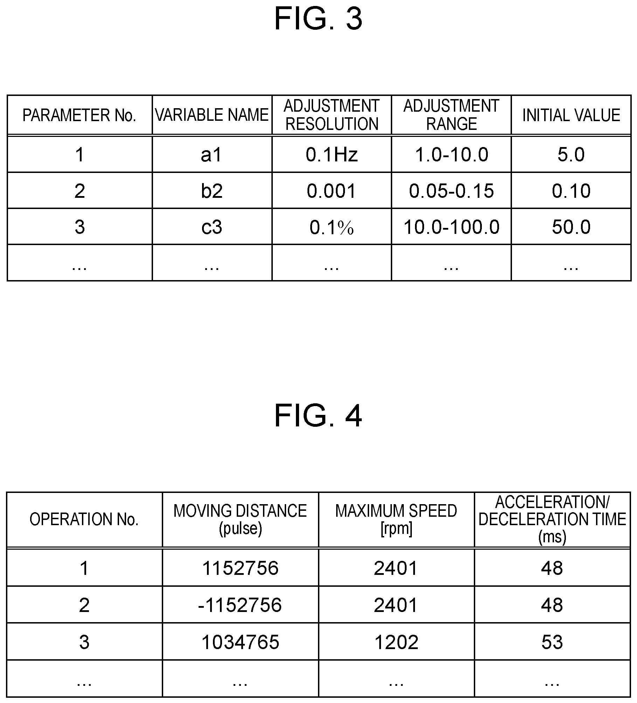

Fig. 3 is a table illustrating an example of control parameters.

As illustrated in Fig. 3, for example, a parameter No., a variable name, an adjustment resolution, an adjustment range, and an initial value are set for each of the plurality of control parameters.

Fig. 4 is a table illustrating an example of an operation pattern.

As illustrated in Fig. 4, an operation No., a moving distance, a maximum speed, and an acceleration/deceleration time (an acceleration time and a deceleration time) are set for each of the plurality of operation patterns.

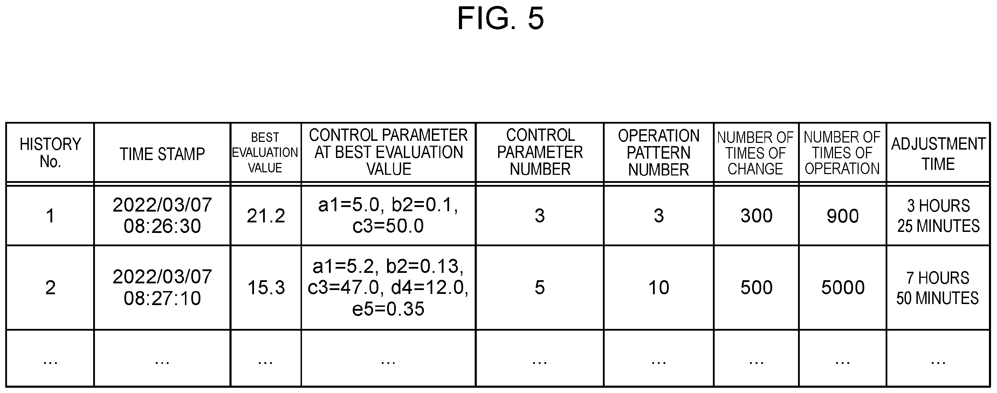

Fig. 5 is a table illustrating an example of a past adjustment history.

As illustrated in Fig. 5, for each of the plurality of adjustment histories, a history No., a time stamp, a best evaluation value, a control parameter at the time of the best evaluation value, the control parameter number, the operation pattern number, the number of times of change, the number of times of operation, and an adjustment time are stored.

For example, it is predetermined that the value of the control parameter is changed by the control parameter number × 100 times. In this case, for example, when the control parameter number is A and the operation pattern number is B, the control parameters are changed A × 100 times, and production device 20 is operated A × 100 × B times to adjust the control parameters.

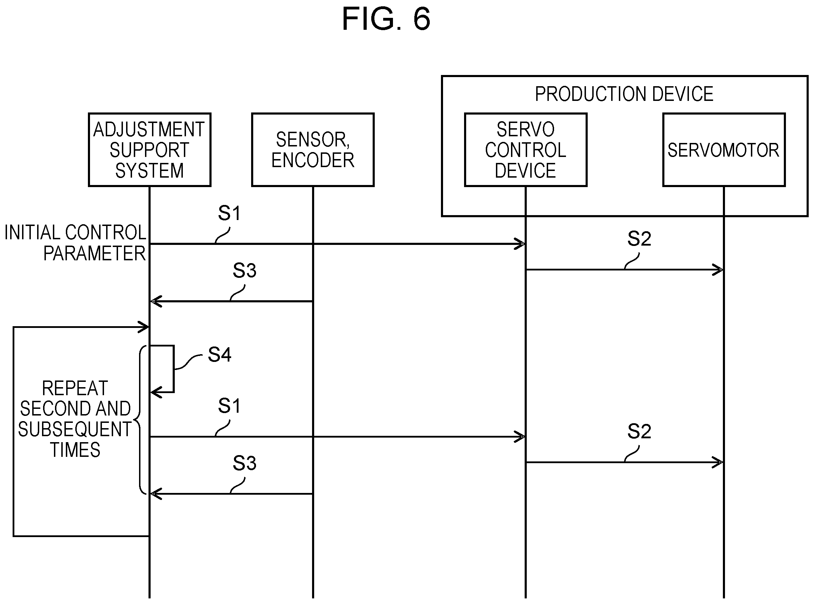

Fig. 6 is a sequence diagram illustrating an example of an operation of adjustment support system 10 and related devices of Fig. 1.

As illustrated in Fig. 6, adjustment support system 10 transmits the control parameter and the operation pattern to servo control device 40 (step S1).

Servo control device 40 controls the operation of production device 20 based on the control parameter and the operation pattern (step S2). Specifically, servo control device 40 sets a control parameter in servo control device 40, and controls servomotor 30 so that production device 20 operates according to the operation pattern, thereby controlling the operation of production device 20.

Adjustment support system 10 acquires encoder information and sensor information (step S3).

Adjustment support system 10 acquires the operation result of production device 20 based on the encoder information and the sensor information (step S4).

As described above, adjustment support system 10 acquires the operation result of production device 20 operated based on the transmitted control parameter and operation pattern.

For example, the above-described processing is repeatedly performed on the basis of at least one of the control parameter number and the operation pattern number.

For example, when the control parameter number is A and the operation pattern number is B, the control parameter is changed A times and production device 20 is operated A × B times. Further, for example, when the control parameter number is A and the operation pattern number is B, the control parameter is changed A × 100 times, and production device 20 is operated A × 100 × B times.

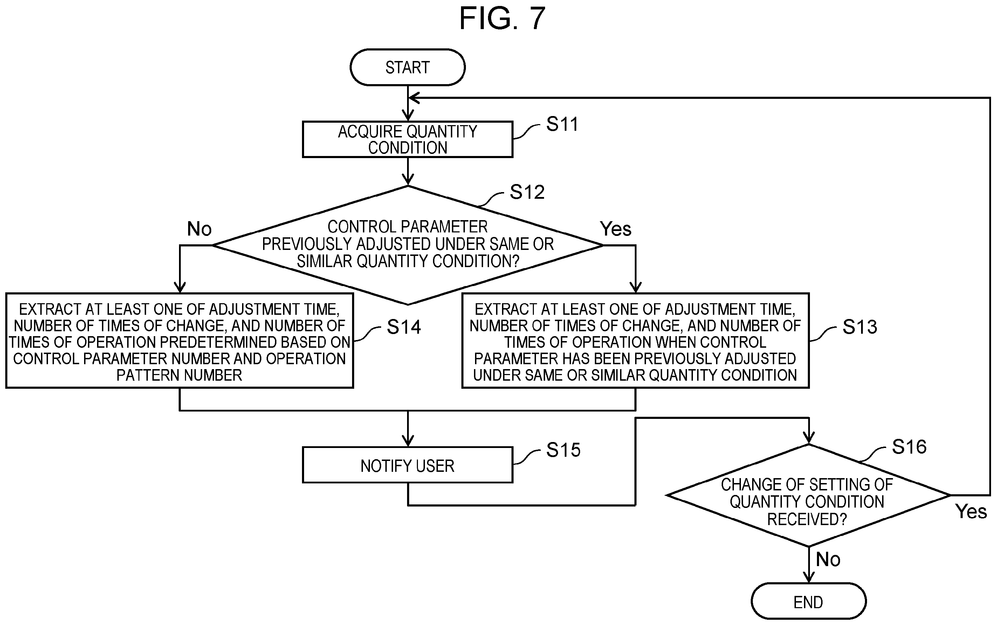

Fig. 7 is a flowchart illustrating an example of the operation of adjustment support system 10 of Fig. 1. Fig. 8 is a diagram illustrating an example of a display displayed on adjustment support system 10 of Fig. 1.

As illustrated in Fig. 7, quantity condition acquiring part 15 acquires the quantity condition (acquisition step) (step S11). For example, as described above, quantity condition acquiring part 15 acquires the quantity condition including at least one of the control parameter number and the operation pattern number selected by the user.

As illustrated in Fig. 8, for example, display 12 displays a selection screen for the user to select at least one of the control parameter number and the operation pattern number. The user selects the control parameter number by sliding bar 80 for selecting the control parameter number. Here, the upper limit value of the control parameter number is set to 60, and the lower limit value of the control parameter number is set to 4. Furthermore, the user slides bar 81 for selecting the operation pattern number to select the number of operation patterns. Here, the upper limit value of the operation pattern number is set to 40, and the lower limit value of the operation pattern number is set to 1. For example, quantity condition acquiring part 15 acquires the quantity condition including at least one of the control parameter number and the operation pattern number selected by the user in this manner.

Returning to Fig. 7, controller 14 determines whether or not the control parameter has been previously adjusted under the quantity condition same as or similar to the quantity condition acquired by quantity condition acquiring part 15 (step S12). For example, if the previous adjustment history of the control parameter is stored in storage 13, and the previous adjustment history related to the quantity condition same as or similar to the quantity condition acquired by quantity condition acquiring part 15 is stored in storage 13, controller 14 determines that the control parameter has been previously adjusted under the quantity condition same as or similar to the quantity condition acquired by quantity condition acquiring part 15. On the other hand, if the previous adjustment history related to the quantity condition same as or similar to the quantity condition acquired by quantity condition acquiring part 15 is not stored in storage 13, controller 14 determines that the control parameter has not been previously adjusted under the quantity condition same as or similar to the quantity condition acquired by quantity condition acquiring part 15.

When determining that the control parameter has been previously adjusted under the quantity condition same as or similar to the quantity condition acquired by quantity condition acquiring part 15 (Yes in step S12), controller 14 extracts at least one of the adjustment time, the number of times of change, and the number of times of operation when the control parameter has been previously adjusted under the quantity condition same as or similar to the quantity condition acquired by quantity condition acquiring part 15 (step S13). For example, controller 14 extracts, from storage 13, at least one of the adjustment time, the number of times of change, and the number of times of operation when the control parameter has been previously adjusted under the quantity condition same as or similar to the quantity condition acquired by quantity condition acquiring part 15.

On the other hand, when determining that the control parameter has not been previously adjusted under the quantity condition same as or similar to the quantity condition acquired by quantity condition acquiring part 15 (No in step S12), controller 14 extracts at least one of the adjustment time, the number of times of change, and the number of times of operation determined in advance based on at least one of the control parameter number and the operation pattern number (step S14). For example, controller 14 extracts, from storage 13, at least one of the adjustment time, the number of times of change, and the number of times of operation determined in advance based on at least one of the control parameter number and the operation pattern number.

Display 12 notifies the user of at least one of the adjustment time, the number of times of change, and the number of times of operation extracted by controller 14 (notification step) (step S15). For example, in a case where the control parameter has been previously adjusted under the quantity condition same as or similar to the quantity condition acquired by quantity condition acquiring part 15, display 12 notifies at least one of the adjustment time, the number of times of change, and the number of times of operation when the control parameter has been previously adjusted under the quantity condition same as or similar to the quantity condition acquired by quantity condition acquiring part 15. On the other hand, when the control parameter has not been previously adjusted under the quantity condition same as or similar to the quantity condition acquired by the quantity condition acquiring part 15, display 12 notifies at least one of the adjustment time, the number of times of change, and the number of times of operation determined in advance based on at least one of the control parameter number and the operation pattern number.

As illustrated in Fig. 8, for example, display 12 notifies at least one of the adjustment time, the number of times of change, and the number of times of operation by displaying at least one of the adjustment time, the number of times of change, and the number of times of operation on a display screen for displaying at least one of the adjustment time, the number of times of change, and the number of times of operation.

Note that, here, display 12 receives selection as to whether or not to notify by display 12 for each of the adjustment time, the number of times of change, and the number of times of operation. Specifically, whether or not to notify the adjustment time can be switched by clicking check box 82, whether or not to notify the number of times of change can be switched by clicking check box 83, and whether or not to notify the number of times of operation can be switched by clicking check box 84.

Returning to Fig. 7, controller 14 determines whether or not a change in the quantity condition has been received (step S16). For example, in a case where the user changes the quantity condition, controller 14 determines that the change of the quantity condition has been received. On the other hand, in a case where the user has not changed the quantity condition, controller 14 determines that the change of the quantity condition has not been received.

When controller 14 determines that the change of the quantity condition has been received (Yes in step S16), quantity condition acquiring part 15 acquires the quantity condition again (acquisition step) (step S11).

On the other hand, when determining that the change of the quantity condition has not been received (No in step S16), controller 14 ends the processing.

Note that, for example, as illustrated in Fig. 8, a specific type, value, and the like of the control parameter can be set by clicking button 85 for detailed setting of the control parameter. Further, the operation pattern can be set by clicking button 86 for detailed setting of the operation pattern.

As a result, it is possible to operate production device 20 on the basis of the set control parameter and operation pattern in a state where display 12 displays at least one of the adjustment time, the number of times of change, and the number of times of operation.

In this case, for example, display 12 may update at least one of the adjustment time to be notified, the number of times of change to be notified, and the number of times of operation to be notified each time the operation of production device 20 by servo control device 40 ends a predetermined number of times.

As described above, in adjustment support system 10, at least one of the adjustment time, the number of times of change, and the number of times of operation can be notified on the basis of at least one of the control parameter number and the operation pattern number before the control parameter is actually adjusted, and how long it is likely to take to adjust the control parameter can be recognized on the basis of at least one of the adjustment time, the number of times of change, and the number of times of operation. As a result, before the control parameter is actually adjusted, it is possible to take measures such as reducing at least one of the control parameter number and the operation pattern number to shorten the time required for adjusting the control parameter. Therefore, it is possible to suppress an increase in power consumption required for adjustment of the control parameter and the like, and it is possible to efficiently adjust the control parameter.

Adjustment support system 10 according to the exemplary embodiment includes an acquisition part (quantity condition acquiring part 15) and a notification part (display 12). The acquisition part (quantity condition acquiring part 15) acquires a quantity condition including at least one of the control parameter number and the operation pattern number. The control parameter number is the number of control parameters for servo control device 40 that controls the operation of the target device (production device 20) including servomotor 30 to control the operation of the target device (production device 20). The operation pattern number is the number of operation patterns of the target device (production device 20). The notification part (display 12) notifies at least one of the adjustment time required to adjust the control parameter, the number of times of change in the control parameter, and the number of times of operation of the target device on the basis of the quantity condition acquired by the acquisition part (quantity condition acquiring part 15). When the control parameter has been previously adjusted under the quantity condition same as or similar to the quantity condition acquired by the acquisition part (quantity condition acquiring part 15), the notification part (display 12) notifies at least one of the adjustment time, the number of times of change, and the number of times of operation when the control parameter has been previously adjusted under the quantity condition same as or similar to the quantity condition acquired by the acquisition part (quantity condition acquiring part 15). When the control parameter has not been previously adjusted under the quantity condition same as or similar to the quantity condition acquired by the acquisition part (quantity condition acquiring part 15), the notification part (display 12) notifies at least one of the adjustment time, the number of times of change, and the number of times of operation determined in advance based on at least one of the control parameter number and the operation pattern number.

According to this, since at least one of the adjustment time, the number of times of change, and the number of times of operation can be notified on the basis of at least one of the control parameter number and the operation pattern number of the target device, it is possible to recognize how long it is likely to take to adjust the control parameter. Therefore, when it is found that it takes too long to adjust the control parameter before the control parameter is actually adjusted, it is possible to suppress that it takes too long to adjust the control parameter by reducing at least one of the control parameter number and the operation pattern number of the target device. Therefore, the control parameter can be efficiently adjusted.

Further, adjustment support system 10 according to the exemplary embodiment includes display 12 that displays a selection screen for the user to select at least one of the control parameter number and the operation pattern number, and the acquisition part (quantity condition acquiring part 15) acquires the quantity condition including at least one of the control parameter number and the operation pattern number selected on the selection screen.

According to this, since the user can select at least one of the control parameter number and the operation pattern number, the control parameter can be adjusted more efficiently.

Furthermore, in adjustment support system 10 according to the exemplary embodiment, servo control device 40 controls the operation of the target device (production device 20) on the basis of the quantity condition acquired by the acquisition part (quantity condition acquiring part 15), and the notification part (display 12) updates at least one of the adjustment time to be notified, the number of times of change to be notified, and the number of times of operation to be notified each time the operation of the target device (production device 20) by servo control device 40 ends a predetermined number of times.

According to this, since the adjustment time, the number of times of change, and the number of times of operation can be notified more accurately, the control parameter can be adjusted more efficiently.

Furthermore, in adjustment support system 10 according to the exemplary embodiment, the notification part (display 12) updates the adjustment time to be notified on the basis of the time required to operate the target device (production device 20) a predetermined number of times.

According to this, since the adjustment time can be notified more accurately, the control parameter can be adjusted more efficiently.

Further, in adjustment support system 10 according to the exemplary embodiment, the notification part (display 12) notifies the adjustment time by displaying the adjustment time on the display screen for displaying the adjustment time.

According to this, since the adjustment time can be notified more easily, the control parameter can be adjusted more efficiently.

In adjustment support system 10 according to the exemplary embodiment, the upper limit value and the lower limit value of each of the control parameter number and the operation pattern number included in the quantity condition acquired by the acquisition part (quantity condition acquiring part 15) are set.

According to this, since the ranges of the control parameter number and the operation pattern number included in the quantity condition to be acquired can be limited to some extent, the adjustment time, the number of times of change, and the number of times of operation can be notified more accurately, and the control parameter can be adjusted more efficiently.

In addition, adjustment support system 10 according to the exemplary embodiment includes a selection part (display 12) that receives selection of a priority order to be notified by the notification part (display 12) for the adjustment time, the number of times of change, and the number of times of operation.

According to this, since it is possible to preferentially notify one having a higher priority order among the adjustment time, the number of times of change, and the number of times of operation, it is possible to more efficiently adjust the control parameter.

In addition, adjustment support system 10 according to the exemplary embodiment includes a selection part (display 12) that receives selection as to whether or not to notify by the notification part (display 12) for each of the adjustment time, the number of times of change, and the number of times of operation.

According to this, it is possible to select whether or not to notify each of the adjustment time, the number of times of change, and the number of times of operation, and thus, it is possible to more efficiently adjust the control parameter.

Furthermore, in adjustment support system 10 according to the exemplary embodiment, the target device (production device 20) includes a mounting device, a processing device, or a machining device.

According to this, even when the target device (production device 20) includes the mounting device, the processing device, or the machining device, the control parameter can be adjusted more efficiently.

The adjustment support method according to the exemplary embodiment includes an acquisition step (step S11) and a notification step (step S15). The acquisition step (step S11) is a step of acquiring a quantity condition including at least one of the control parameter number and the operation pattern number. The control parameter number is the number of control parameters for servo control device 40 that controls the operation of the target device (production device 20) including servomotor 30 to control the operation of the target device (production device 20). The operation pattern number is the number of operation patterns of the target device (production device 20). The notification step (step S15) is a step of notifying at least one of the adjustment time required to adjust the control parameter, the number of times of change of the control parameter, and the number of times of operation of the target device (production device 20) on the basis of the quantity condition acquired by the acquisition step (step S11). In the notification step (step S15), when the control parameter has been previously adjusted under the quantity condition same as or similar to the quantity condition acquired in the acquisition step (step S11), at least one of the adjustment time, the number of times of change, and the number of times of operation when the control parameter has been previously adjusted under the quantity condition same as or similar to the quantity condition acquired in the acquisition step is notified. In the notification step (step S15), when the control parameter has not been previously adjusted under the quantity condition same as or similar to the quantity condition acquired in the acquisition step (step S11), at least one of the adjustment time, the number of times of change, and the number of times of operation determined in advance based on at least one of the control parameter number and the operation pattern number is notified.

According to this, the adjustment support method has the same effects as those of adjustment support system 10 described above.

### (Other exemplary embodiments and the like)

As described above, the exemplary embodiments have been described as an illustration of the techniques disclosed in the present application. However, the technology according to the present disclosure is not limited thereto, and can also be applied to exemplary embodiments or modifications in which changes, replacements, additions, omissions, and the like are made as appropriate without departing from the spirit of the present disclosure.

In addition, general or specific aspects of the present disclosure may be realized by a system, an apparatus, a method, an integrated circuit, a computer program, or a computer-readable recording medium such as a CD-ROM. In addition, the present invention may be realized by an arbitrary combination of a system, an apparatus, a method, an integrated circuit, a computer program, and a recording medium.

For example, the present disclosure may be realized as the adjustment support system of the above-described exemplary embodiment. Furthermore, the present disclosure may be realized as an adjustment support device. Furthermore, the present disclosure may be realized as an adjustment support method. Furthermore, the present disclosure may be realized as a program for causing a computer to execute the adjustment support method, or may be realized as a computer-readable non-transitory recording medium in which such a program is recorded.

### (Appendix)

The above description of the exemplary embodiments discloses the following technologies.

### (Technology 1)

An adjustment support system, including:
an acquisition part that acquires a quantity condition including at least one of a control parameter number, which is the number of control parameters for a servo control device that controls an operation of a target device including a servomotor to control the operation of the target device, and an operation pattern number, which is the number of operation patterns of the target device; and
a notification part that notifies at least one of an adjustment time required to adjust the control parameter, a number of times of change of the control parameters, and a number of times of operations of the target device based on the quantity condition acquired by the acquisition part, in which
the notification part,
notifies, in a case where the control parameters have been previously adjusted under the quantity condition same as or similar to the quantity condition acquired by the acquisition part, at least one of the adjustment time, the number of times of change, and the number of times of the operations when the control parameters have been previously adjusted under the quantity condition same as or similar to the quantity condition acquired by the acquisition part, and
notifies, in a case where the control parameters have not been previously adjusted under the quantity condition same as or similar to the quantity condition acquired by the acquisition part, at least one of the adjustment time, the number of times of change, and the number of times of the operations determined in advance based on at least one of the control parameter number and the operation pattern number.

### (Technology 2)

The adjustment support system according to Technology 1, further including, as a notification part, a display that displays a selection screen for a user to select at least one of the control parameter number and the operation pattern number, in which
the acquisition part acquires the quantity condition including at least one of the control parameter number and the operation pattern number selected on the selection screen.

### (Technology 3)

The adjustment support system according to Technology 1 or 2, in which
the servo control device controls the operation of the target device based on the quantity condition acquired by the acquisition part, and
the notification part updates at least one of the adjustment time to be notified, the number of times of change to be notified, and the number of times of operation to be notified each time the operation of the target device by the servo control device ends a predetermined number of times.

### (Technology 4)

The adjustment support system according to Technology 3, in which the notification part updates the adjustment time to be notified on the basis of a time required to operate the target device the predetermined number of times.

### (Technology 5)

The adjustment support system according to any one of Technologies 1 to 4, in which the notification part notifies the adjustment time by displaying the adjustment time on a display screen for displaying the adjustment time.

### (Technology 6)

The adjustment support system according to any one of Technologies 1 to 5, in which an upper limit value and a lower limit value of each of the control parameter number and the operation pattern number included in the quantity condition acquired by the acquisition part are set.

### (Technology 7)

The adjustment support system according to any one of Technologies 1 to 6, further including a selection part that receives selection of a priority order notified by the notification part for the adjustment time, the number of times of change, and the number of times of operation.

### (Technology 8)

The adjustment support system according to any one of Technologies 1 to 6, further including a selection part that receives selection as to whether or not to notify by the notification part for each of the adjustment time, the number of times of change, and the number of times of operation.

### (Technology 9)

The adjustment support system according to any one of Technologies 1 to 8, in which the target device includes a mounting device, a processing device, or a machining device.

### (Technology 10)

An adjustment support method, including:
an acquisition step of acquiring a quantity condition including at least one of a control parameter number, which is the number of control parameters for a servo control device that controls an operation of a target device including a servomotor to control the operation of the target device, and an operation pattern number, which is the number of operation patterns of the target device; and
a notification step of notifying at least one of an adjustment time required to adjust the control parameter, a number of times of change of the control parameter, and a number of times of operation of the target device based on the quantity condition acquired by the acquisition step, in which
the notification step,
notifies, in a case where the control parameter has been previously adjusted under the quantity condition same as or similar to the quantity condition acquired by the acquisition step, at least one of the adjustment time, the number of times of change, and the number of times of operation when the control parameter has been previously adjusted under the quantity condition same as or similar to the quantity condition acquired by the acquisition step, and
notifies, in a case where the control parameter has not been previously adjusted under the quantity condition same as or similar to the quantity condition acquired by the acquisition step, at least one of the adjustment time, the number of times of change, and the number of times of operation determined in advance based on at least one of the control parameter number and the operation pattern number.

### INDUSTRIAL APPLICABILITY

The adjustment support system and the adjustment support method according to the present disclosure can be used for a system or the like that supports adjustment of a control parameter of a servo control device.

### REFERENCE MARKS IN THE DRAWINGS

10: adjustment support system
11: operation part
12: display
13: storage
14: controller
15: quantity condition acquiring part
16: servo information output part
17: operation result acquiring part
18: learning part
19: prediction result output part
20: production device
30: servomotor
40: servo control device
41: servo information acquiring part
42: servo information output part
43: storage
44: controller
50: encoder
60: sensor
70: sensor information collecting device
80, 81: bar
82, 83, 84: check box
85, 86: button

## Claims

1. An adjustment support system, comprising:
an acquisition part that acquires a quantity condition including at least one of a control parameter number and an operation pattern number, the control parameter number indicating a total number of control parameters for a servo control device to control an operation of a target device including a servomotor, the operation pattern number indicating a total number of operation patterns of the target device; and
a notification part that notifies at least one of an adjustment time required to adjust the control parameters, a number of times of change of the control parameters, and a number of times of operations of the target device based on the quantity condition acquired by the acquisition part, wherein
the notification part,
notifies, in a case where the control parameters have been previously adjusted under the quantity condition same as or similar to the quantity condition acquired by the acquisition part, at least one of the adjustment time, the number of times of change, and the number of times of the operations when the control parameters have been previously adjusted under a quantity condition same as or similar to the quantity condition acquired by the acquisition part, and
notifies, in a case where the control parameters have not been previously adjusted under the quantity condition same as or similar to the quantity condition acquired by the acquisition part, at least one of the adjustment time, the number of times of change, and the number of times of the operations determined in advance based on at least one of the control parameter number and the operation pattern number.

2. The adjustment support system according to Claim 1, further comprising, as a notification part, a display that displays a selection screen for a user to select at least one of the control parameter number and the operation pattern number, wherein
the acquisition part acquires the quantity condition including at least one of the control parameter number and the operation pattern number selected on the selection screen.

3. The adjustment support system according to Claim 1 or 2, wherein
the servo control device controls the operation of the target device based on the quantity condition acquired by the acquisition part, and
the notification part updates at least one of the adjustment time to be notified, the number of times of change to be notified, and the number of times of operation to be notified each time the operation of the target device by the servo control device ends a predetermined number of times.

4. The adjustment support system according to Claim 3, wherein the notification part updates the adjustment time to be notified on a basis of a time required to operate the target device the predetermined number of times.

5. The adjustment support system according to Claim 1 or 2, wherein the notification part notifies the adjustment time by displaying the adjustment time on a display screen for displaying the adjustment time.

6. The adjustment support system according to Claim 1 or 2, wherein an upper limit value and a lower limit value of each of the control parameter number and the operation pattern number included in the quantity condition acquired by the acquisition part are set.

7. The adjustment support system according to Claim 1 or 2, further comprising a selection part that receives selection of a priority order notified by the notification part for the adjustment time, the number of times of change, and the number of times of operation.

8. The adjustment support system according to Claim 1 or 2, further comprising a selection part that receives selection as to whether or not to notify by the notification part for each of the adjustment time, the number of times of change, and the number of times of operation.

9. The adjustment support system according to Claim 1 or 2, wherein the target device includes a mounting device, a processing device, or a machining device.

10. An adjustment support method, including:
an acquisition step of acquiring a quantity condition including at least one of a control parameter number, which is the number of control parameters for a servo control device that controls an operation of a target device including a servomotor to control the operation of the target device, and an operation pattern number, which is the number of operation patterns of the target device; and
a notification step of notifying at least one of an adjustment time required to adjust the control parameter, a number of times of change of the control parameter, and a number of times of operation of the target device based on the quantity condition acquired by the acquisition step, in which
the notification step,
notifies, in a case where the control parameter has been previously adjusted under the quantity condition same as or similar to the quantity condition acquired by the acquisition step, at least one of the adjustment time, the number of times of change, and the number of times of operation when the control parameter has been previously adjusted under the quantity condition same as or similar to the quantity condition acquired by the acquisition step, and
notifies, in a case where the control parameter has not been previously adjusted under the quantity condition same as or similar to the quantity condition acquired by the acquisition step, at least one of the adjustment time, the number of times of change, and the number of times of operation determined in advance based on at least one of the control parameter number and the operation pattern number.
